# EUROPEAN PATENT APPLICATION

(11) **EP 3 168 818 A1**
(43) Date of publication of application: **17.05.2017**
(21) Application number: 16198791.2
(22) Date of filing: 15.11.2016
(51) Int. Cl.: G07G 1/00

(54) **CHECKOUT APPARATUS**

(30) Priority: 16.11.2015 JP 2015224135
(71) Applicant: Toshiba TEC Kabushiki Kaisha, Tokyo 141-0032 (JP)
(72) Inventor: NAITO, Hidehiro, Shinagawa-ku, Tokyo 141-8562 (JP)
(74) Representative: Takeuchi, Maya

(57) **Abstract**

According to one embodiment, there is provided a checkout apparatus including a first placing section configured to place thereon a commodity having a commodity specifying information for specifying the commodity; a reading unit configured to read the commodity specifying information of the commodity placed on the first placing section; a second placing section configured to place the commodity the commodity specifying information of which is read by the reading unit; an image capturing unit configured to capture an image of the commodity placed on the first placing section; a display unit configured to display the image of the commodity; and a display section configured to display an image captured by the image capturing unit on the display unit if the image capturing unit captures the image showing at least a part of a movement of the commodity placed on the first placing section to the second placing section.

## Description

### FIELD

Embodiments described herein relate generally to a checkout apparatus, a system for processing the commodity sales and a method for performing a checkout.

### BACKGROUND

Conventionally, in the commodity sales processing, for example, a self-checkout apparatus is used by a customer to carry out a commodity sales registration. In such a checkout apparatus, a customer places a basket in which commodity is put on a table and takes out the commodity from the basket to perform the commodity sales registration by reading a commodity code attached to the commodity with a reading device. After reading the commodity code, the commodity is put in a bag set on a table arranged at the opposite side.

In such a checkout apparatus, to prevent an unfair act by the customer when the registration operation is performed, for example, weighing devices are provided at tables, respectively, and it is determined whether or not unfair act is performed at the time of the registration operation by monitoring a weight difference between the weighing devices. Specifically, a first weight change of the weighing device occurs when the customer takes out the commodity from the basket on the table and a second weight change of the other weighing device occurs when the customer puts the commodity in the bag on the opposite table after reading the commodity code with the reading device. It can be determined that the unfair act is not performed if the first weight change and the second weight change are the same.

However, the customer cannot recognize that the registration operation is monitored by the weighing devices while the registration operation is performed. Thus, although the unfair act in the registration operation by the customer can be detected, it is difficult to prevent the customer from performing the unfair act in the registration operation.

To solve such problems, there is provided a checkout apparatus comprising:
a first placing section configured to place thereon a commodity having a commodity specifying information for specifying the commodity;
a reading unit configured to read the commodity specifying information of the commodity placed on the first placing section;
a second placing section configured to place the commodity the commodity specifying information of which is read by the reading unit;
an image capturing unit configured to capture an image of the commodity placed on the first placing section;
a display unit configured to display the image of the commodity; and
a display section configured to display an image captured by the image capturing unit on the display unit if the image capturing unit captures the image showing at least a part of a movement of the commodity placed on the first placing section to the second placing section.

Preferably, the display section displays an image captured by the image capturing unit, the image showing that the commodity placed on the first placing unit is taken out for movement to the second placing unit.

Preferably still, the display section displays an image captured by the image capturing unit, the image showing a sequence of flow in which the commodity placed on the first placing unit is moved to the second placing unit.

Preferably yet, the display section displays a commodity information of the commodity on which a sales registration processing is performed based on the commodity specifying information read by the reading unit together with the image of the commodity on the display unit.

Suitably, the apparatus further comprises:
a receiving section configured to receive the commodity specifying information read by the reading unit; and
an error notification section configured to notify an error on condition that the commodity specifying information is not received by the receiving section if the commodity placed on the first placing unit displayed on the display unit is moved from the first placing unit.

The invention also relates to a system for processing the commodity sales, comprising:
a first placing means configured to place thereon a commodity having a commodity specifying information for specifying the commodity;
a reading means configured to read the commodity specifying information of the commodity placed on the first placing means;
a second placing means configured to place the commodity the commodity specifying information of which is read by the reading means;
an image capturing means configured to capture an image of the commodity placed on the first placing means;
a display unit means configured to display the image of the commodity; and
a display section means configured to display an image captured by the image capturing means on the display unit means if the image capturing unit means captures the image showing at least a part of a movement of the commodity placed on the first placing means to the second placing means.

Preferably, the display section means displays an image captured by the image capturing means, the image showing that the commodity placed on the first placing means is taken out for movement to the second placing means.

Preferably still, the display section means displays an image captured by the image capturing means, the image showing a sequence of flow in which the commodity placed on the first placing means is moved to the second placing means.

Preferably yet, the display section means displays a commodity information of the commodity on which a sales registration processing is performed based on the commodity specifying information read by the reading means together with the image of the commodity on the display unit means.

Conveniently, the apparatus further comprises:
a receiving means configured to receive the commodity specifying information read by the reading means; and
an error notification means configured to notify an error on condition that the commodity specifying information is not received by the receiving means if the commodity placed on the first placing means displayed on the display unit means is moved from the first placing means.

The invention further concerns a method for performing a checkout, comprising the steps of:
- placing on a first placing section a commodity having a commodity specifying information for specifying the commodity;
- reading the commodity specifying information of the commodity placed on the first placing section by a reading unit;
- placing, by a second placing section, the commodity the commodity specifying information of which is read by the reading unit;
- capturing an image of the commodity placed on the first placing section by an image capturing unit;
- displaying the image of the commodity by a display unit; and
- displaying, by a display section, an image captured by the image capturing unit on the display unit if the image capturing unit captures the image showing at least a part of a movement of the commodity placed on the first placing section to the second placing section.

Preferably, the displaying step by the display section comprises displaying an image captured by the image capturing unit, the image showing that the commodity placed on the first placing unit is taken out for movement to the second placing unit.

Preferably still, the displaying step by the display section comprises displaying an image captured by the image capturing unit, the image showing a sequence of flow in which the commodity placed on the first placing unit is moved to the second placing unit.

Preferably yet, the displaying step by the display section comprises displaying commodity information of the commodity on which a sales registration processing is performed based on the commodity specifying information read by the reading unit together with the image of the commodity on the display unit.

Typically, the method further comprises the steps of:
- receiving, by a receiving section, the commodity specifying information read by the reading unit; and
- notifying, by an error notification section, an error on condition that the commodity specifying information is not received by the receiving section if the commodity placed on the first placing unit displayed on the display unit is moved from the first placing unit.

### DESCRIPTION OF THE DRAWINGS

The above and other objects, features and advantages of the present invention will be made apparent from the following description of the preferred embodiments, given as no-limiting examples, with reference to the accompanying drawings, in which:
FIG. 1 is a perspective view illustrating a self-checkout POS terminal according to one embodiment;
FIG. 2 is a block diagram illustrating the hardware configuration of the self-checkout POS terminal;
FIG. 3 is a block diagram illustrating the functional configuration of the self-checkout POS terminal.
FIG. 4 is a flowchart illustrating a flow of the control processing in the self-checkout POS terminal;
FIG. 5 is a diagram illustrating an example of a display screen on a display unit in the self-checkout POS terminal;
FIG. 6 is a diagram illustrating an example of a display screen on the display unit in the self-checkout POS terminal;
FIG. 7 is a diagram illustrating an example of a display screen on the display unit in the self-checkout POS terminal;
FIG. 8 is a diagram illustrating an example of a display screen on the display unit in the self-checkout POS terminal;
FIG. 9 is a diagram illustrating an example of a display screen on the display unit in the self-checkout POS terminal; and
FIG. 10 is a perspective view illustrating a self- checkout apparatus according to another embodiment.

### DETAILED DESCRIPTION

Though the description below mainly relates to a checkout apparatus, it applies mutatis mutandis to a system for processing the commodity sales as defined in claims 6 to 10 and to a method for performing a checkout as defined in claims 11 to 15.

According to one embodiment, there is provided a checkout apparatus including a first placing section configured to place thereon a commodity having a commodity specifying information for specifying the commodity; a reading unit configured to read the commodity specifying information of the commodity placed on the first placing section; a second placing section configured to place the commodity the commodity specifying information of which is read by the reading unit; an image capturing unit configured to capture an image of the commodity placed on the first placing section; a display unit configured to display the image of the commodity; and a display section configured to display an image captured by the image capturing unit on the display unit if the image capturing unit captures the image showing at least a part of a movement of the commodity placed on the first placing section to the second placing section.

Hereinafter, a checkout apparatus according to one embodiment is described in detail with reference to the accompanying drawings. In the embodiment, a self-checkout point of sales (POS) terminal in which a registration operation and an accounting operation are performed by a customer is described as a checkout apparatus. Embodiments described herein are an example and thus the invention is not limited by the embodiments described below.

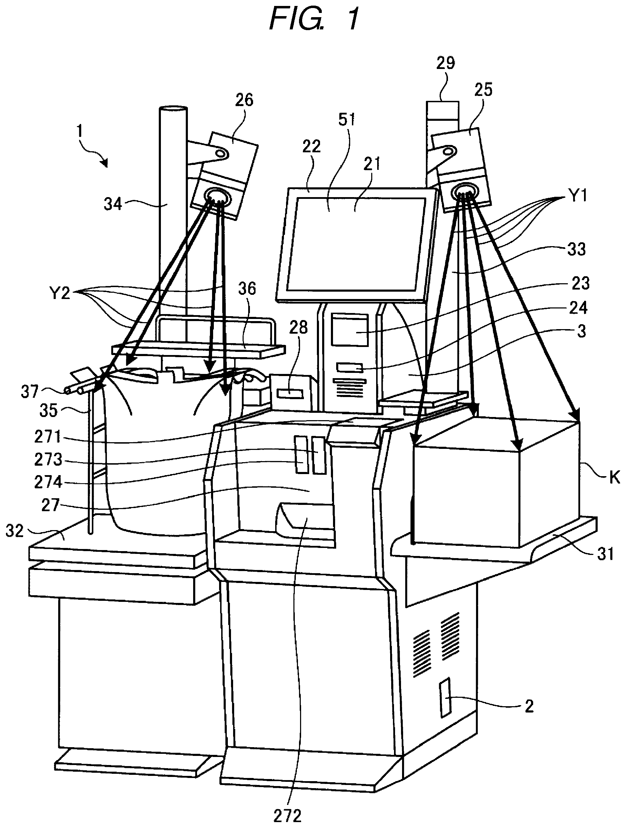

FIG. 1 is a perspective view illustrating a self-checkout POS terminal according to one embodiment. As illustrated in FIG. 1, the self-checkout POS terminal (hereinafter referred to as a self-POS) 1 includes a registration unit that processes a registration operation by reading a commodity code for specifying a commodity to be purchased and an accounting unit that processes an accounting operation based on a commodity information corresponding to the commodity code which is read. The registration operation by the registration unit and the accounting operation by the accounting unit are performed by a customer himself/herself. The registration operation is referred to an operation of taking out the commodity from a basket in which the commodity is put, performing sales registration of the commodity by reading the commodity code with a reading unit, and bagging the commodity in a bag that is set on the opposite table. The self-POS terminal 1 executes a sales registration processing according to the registration operation performed by the customer. Further, the self-POS terminal 1 executes an accounting processing according to the accounting operation performed by the customer.

The sales registration processing is referred to processing of displaying and storing the commodity information including a commodity name, a unit price, and the like based on the input commodity code. The accounting processing is referred to processing of displaying the total amount relating to a transaction based on the commodity information of the commodity on which the sales registration processing is performed, performing accounting based on a deposited amount from the customer, and issuing a receipt. The sales registration processing and the accounting processing are included in the transaction processing. The commodity information and the accounting information are included in the transaction information.

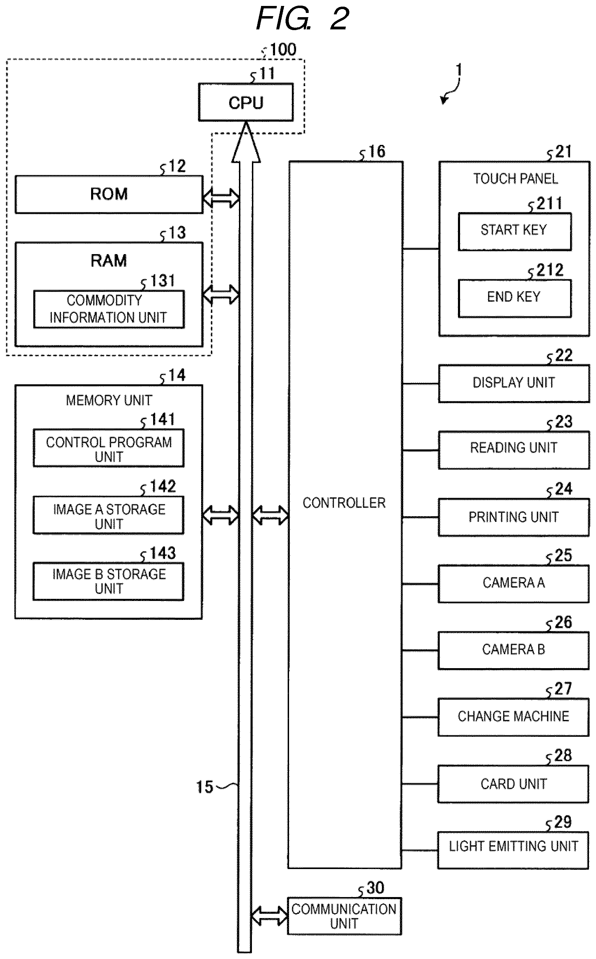

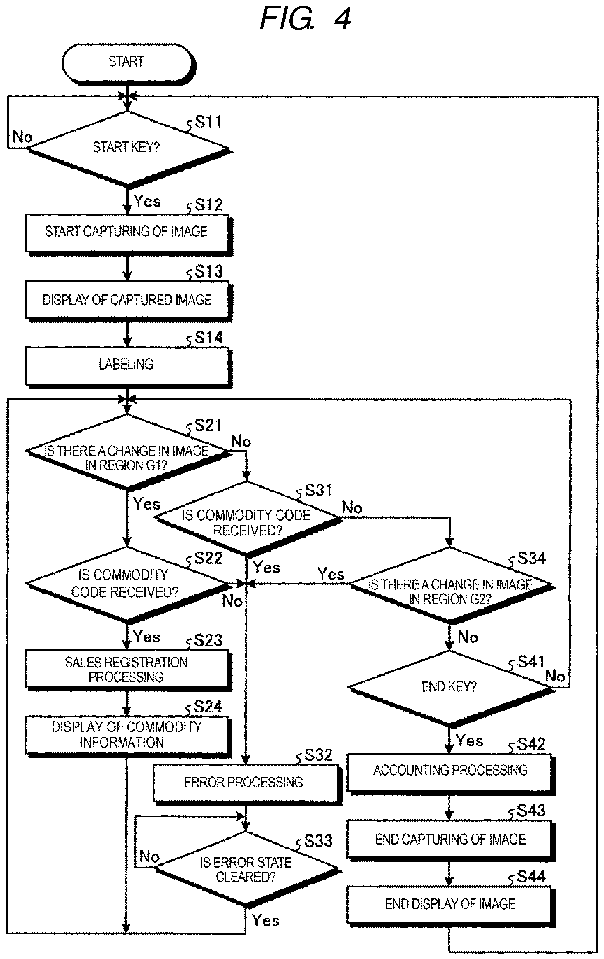

The self-POS terminal 1 includes a first housing 2 and a second housing 3. The first housing 2 accommodates a control device (not illustrated) and a change machine 27 that functions as a coin change machine and a bill change machine therein. The change machine 27 stores money or cash deposited from the customer by denomination. The change machine 27 also dispenses a change to the customer. The control device executes a control processing (refer to FIG. 4) of the self-POS terminal 1. The control device includes a control unit 100, a memory unit 14, a communication unit 30, a power supply unit (not illustrated), and the like as shown in FIG. 2.

The first housing 2 includes a money insert port 271 for inserting a coin to the change machine 27, and a money discharge port 272 for dispensing a coin from the change machine 27. Further, the first housing 2 includes a money insert port 273 for inserting a bill to the change machine 27, and a money discharge port 274 for dispensing a bill from the change machine 27. The customer deposits required coins within all the amount for purchasing the commodity to the money insert port 271, and deposits bills to the money insert port 273, as the accounting operation. The self-POS terminal 1 receives the deposited money to the inside of the change machine 27, and stores the received money in a storage unit by denomination. The self-POS terminal 1 dispenses a change corresponding to coins in the total change to be paid to the customer from the change machine 27 to the money discharge port 272. The self-POS terminal 1 further dispenses a change corresponding to bills in the total change to be paid to the customer from the change machine 27 to the money discharge port 274.

The first housing 2 includes a basket placing stand 31 (first placing part) and a plastic bag stand 32 (second placing part) at the right and left sides thereof. The basket placing stand 31 provided at the right side of the first housing 2 is used to place a basket K in which the commodity to be purchased is put. The plastic bag stand 32 provided at the left side of the first housing 2 is used to set or support a plastic bag F for bagging therein the commodity taken out from the basket K on the basket placing stand 31. The commodity bagged in the plastic bag F is placed on the plastic bag stand 32.

The plastic bag stand 32 includes two posts 35 that extend from the upper surface of the plastic bag stand 32 toward the upper side of the plastic bag stand 32, a temporary placing stand 36 that is formed to be flat above the posts 35, and two extension rods 37 that extend substantially horizontally from the temporary placing stand 36. The extension rods 37 are used to support or hold the plastic bag F for bagging the commodity after the commodity code is read by a reading unit 23 described later. The plastic bag F is set on the plastic bag stand 32 in a state where the handles or grip portions of the plastic bag F are respectively held on the extension rods 37 and thus the plastic bag F is open to easily put the commodity in the plastic bag F. The temporary placing stand 36 is used to place fragile commodity (tofu, i.e., caked soybeans and eggs) in the commodities of which the commodity code is read by the reading unit 23. The commodity placed on the temporary placing stand 36 is finally bagged in the plastic bag F.

The second housing 3 is provided above the first housing 2. The second housing 3 accommodates the reading unit 23 and a printing unit 24. The reading unit 23 includes a charge coupled device (CCD) sensor (not illustrated). The reading unit 23 reads the commodity code included in a code such as a bar code or a two-dimensional code attached to the commodity by capturing an image of the commodity with the CCD sensor. The printing unit 24 includes, for example, a thermal head, to issue a receipt by printing the transaction information of the commodity purchased by the customer. Further, the self-POS terminal 1 includes a card unit 28 at a side of the second housing 3 on the upper surface of the first housing 2. The card unit 28 reads a customer specifying information from the inserted credit card, for example. The self-POS terminal 1 executes the accounting processing based on the customer specifying information read by the card unit 28.

The second housing 3 further includes a display unit 22 at the upper portion thereof. The display unit 22 displays commodity information of the commodity on which the sales registration is performed according to the registration operation by the customer. In addition, the display unit 22 displays the accounting information according to the accounting operation by the customer. The display unit 22 is arranged such that a display surface 51 thereof faces the customer who operates the self-POS terminal 1. The display unit 22 includes a touch panel 21 on the display surface 51. The customer operates the touch panel 21 at a position corresponding to a key displayed on the display unit 22, and thus the displayed key functions.

The self-POS terminal 1 includes a cylindrical pole 33 extending upwardly from the upper surface of the first housing 2, behind the second housing 3. A light emitting unit 29 is arranged at the upper tip portion of the pole 33 to emit light when the customer performs an operation of calling an attendant or the like. The self-POS terminal 1 includes a camera A 25 (image capturing unit) immediately below the light emitting unit 29 of the pole 33. The camera A 25 captures an image of the area surrounded by arrows Y1. The camera A 25 can capture an image of the basket K placed on the basket placing stand 31 and an image of the commodity put in the basket K. The camera A 25 can also capture an image of the operation in which the the customer takes out the commodity which is put in the basket K. The capturing an image is referred to capturing a moving image or continuous still images by the camera A 25.

A control unit 100 (refer to FIG. 2) described later respectively distinguishes and recognizes commodities in the basket K. This technology called as "contour extraction" or "edge extraction" is a well-known technique for recognizing a portion at which color or concentration between an object and other objects or between an object and a background (basket K in the embodiment) sharply changes, as a contour (edge), based on the captured image. The control unit 100 recognizes the object surrounded by the contour as one commodity by continuously labeling the contour to distinguish the commodity from other commodity. In this manner, the control unit 100 distinguishes each commodity in the basket K. Hereinafter, the above-described technique is referred to as a "labeling".

The control unit 100 recognizes that a commodity distinguished by labeling is taken out. For example, at the timing the commodity recognized in the moving image or the continuous still images captured by the camera 25 disappeared from the image, the control unit 100 recognizes that the commodity is taken out.

The self-POS terminal 1 includes a cylindrical pole 34 extending upwardly from the upper surface of the plastic bag stand 32, behind the plastic bag stand 32. The self-POS terminal 1 includes a camera B 26 (image capturing unit) at the upper tip portion of the pole 34. The camera B 26 captures an image of the area surrounded by arrows Y2. The camera B 26 can capture an image of the plastic bag F set on the plastic bag stand 32. The camera B 26 can capture an image of the commodity bagged in the plastic bag F. The camera B 26 can capture an image of the operation in which the customer puts a commodity in the plastic bag F. The control unit 100 can perform labeling of the commodity captured by the camera B 26.

The hardware configuration of the self-POS terminal 1 is described. FIG. 2 is a block diagram illustrating the hardware configuration of the self-POS terminal 1. As illustrated in FIG. 2, the self-POS terminal 1 includes a central processing unit (CPU) 11, a read only memory (ROM) 12, a random access memory (RAM) 13, and a memory unit 14, and the like. The CPU 11 is a main control section. The ROM 12 stores various programs. The RAM 13 expands various data. The memory unit 14 stores various programs. The CPU 11, the ROM 12, the RAM 13, and the memory unit 14 are connected to each other via a data bus 15. The control unit 100 is composed of the CPU 11, the ROM 12, and the RAM 13. The CPU 11 operates according to the control program, stored in the ROM 12 or the memory unit 14, which is expanded on the RAM 13, and thus the control unit 100 executes the control processing described later.

The memory unit 14 is composed of a hard disc drive (HDD) in which the stored data is held even though power supply is turned off, and a non-volatile memory such as a flash memory. The memory unit 14 includes a control program unit 141 that stores a control program, an image A storage unit 142, and an image B storage unit 143. The image A storage unit 142 stores the image captured by the camera A 25. The image B storage unit 143 stores the image captured by the camera B 26.

The control unit 100 is connected to the touch panel 21, the display unit 22, the reading unit 23, the printing unit 24, the camera A 25, the camera B 26, the change machine 27, the card unit 28, and the light emitting unit 29, via the data bus 15 and a controller 16.

The touch panel 21 includes a start key 211 corresponding to display of "start key" of the display unit 22, an end key 212 corresponding to display of "end key" of the display unit 22. In the following description, "the key provided on the touch panel 21 that corresponds to display of the key of the display unit 22" is simply described as "the key displayed on the display unit 22", for example.

The start key 211 is operated by the customer in a case in which the sales registration operation is started by the customer in the self-POS terminal 1. The end key 212 is operated by the customer in a case in which the sales registration operation is ended by the customer in the self-POS terminal 1.

The display unit 22 is composed of, for example, a liquid crystal panel. The display unit 22 displays the still image or the moving image captured by the cameras A 25 and B 26. The camera A and the camera B respectively include a CCD image sensor (not illustrated) to capture an image using the CCD image sensor.

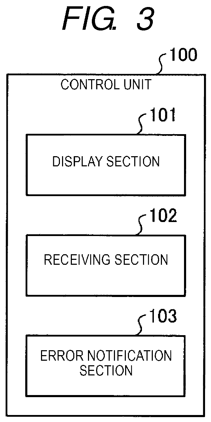

The control of the self-POS terminal 1 according to the operation by the customer is described in detail with reference to FIGS. 3 to 9. FIG. 3 is a functional block diagram illustrating the functional configuration of the self-POS terminal 1. The control unit 100 functions as a display section 101, a receiving section 102, and an error notification section 103 according to the control program stored in the ROM 12 or the control program unit 141 of the memory unit 14.

The display section 101 has a function of displaying on the display unit 22 the image, captured by the image capturing unit, which indicates all or part of the movement of the commodity placed on the basket placing stand 31 to the plastic bag stand 32.

The receiving section 102 has a function of receiving the commodity code read by the reading unit 23.

The error notification section 103 has a function of notifying an error on condition that the commodity code is not received by the receiving section 102 when one of the commodities displayed by the display section 101 and placed on the basket placing stand 31 is moved from the basket placing stand 31.

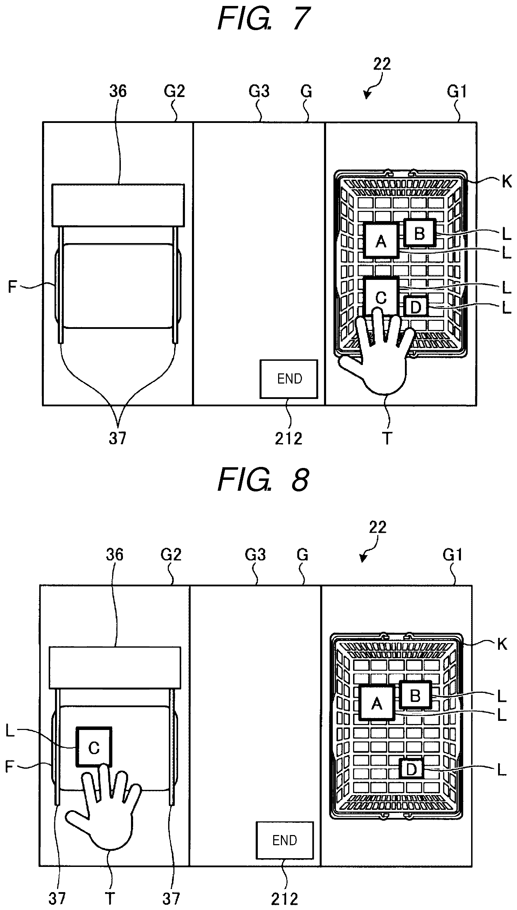

FIGS. 4 to 9 are diagrams illustrating a flowchart that shows the flow of the control processing of the self-POS terminal 1 and display screens associated with the flowchart. The customer places the basket K, in which the commodity is put, on the basket placing stand 31. Then, the customer operates the start key 211 displayed on the display unit 22. The control unit 100 determines whether or not the start key 211 is operated (Act S11). The control unit 100 waits for until the start key 211 is operated (No in Act S11). If it is determined that the start key 211 is operated (Yes in Act S11), the control unit 100 starts capturing of an image of the commodity, using the camera A 25 and the camera B 26 (Act S12). The camera A 25 starts capturing an image of the commodity in the basket K placed on the basket placing stand 31. Then, the control unit 100 (display section 101) displays the image captured by the camera A 25 in the region G1 at the right side (refer to FIG. 7) of the display unit 22 (Act S13). The camera B 26 captures an image of the commodity in the plastic bag F set on the plastic bag stand 32. Then, the control unit 100 (display section 101) displays the image captured by the camera B 26, the region G2 at the left side (refer to FIG. 7) of the display unit 22 (Act S13). At this time, no commodity is not bagged in the plastic bag F. The control unit 100 stores the image captured by the camera A 25 in the image A storage unit 142. Further, the control unit 100 stores the image captured by the camera B 26 in the image B storage unit 143.

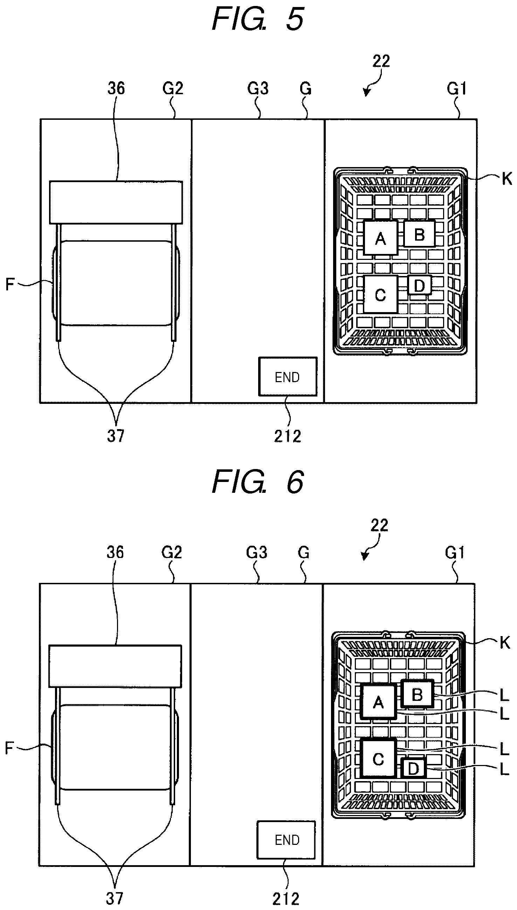

FIG. 5 illustrates an example of a display screen on which an image is displayed on the display unit 22 by the control unit 100 in Act S13. As illustrated in FIG. 5, the control unit 100 displays a display screen G on the display unit 22. The display screen G is composed of a region G1 displayed at the right side thereof, a region G2 displayed at the left side thereof, and a region G3 displayed on the center portion thereof. The control unit 100 displays the image captured by the camera A 25 in the region G1. The control unit 100 displays the image captured by the camera B 26 in the region G2. The control unit 100 displays the commodity information of the commodity on which the sales registration is performed, in the region G3. The control unit 100 displays the image captured by the camera A 25 at the side of the display screen G at which the basket K is placed. Further, the control unit 100 displays the image captured by the camera B 26 at the side of the display screen G at which the plastic bag F is set.

In FIG. 5, in Act S13, the image captured by the camera A 25 is displayed in the region G1. In the region G1, commodities A, B, C, and D purchased by the customer are displayed together with the basket K placed. In Act S13, the image captured by the camera B 26 is displayed in the region G2. The temporary placing stand 36, the extension rods 37, and the plastic bag F set across the extension rods 37 are captured by the camera B 26, and displayed in the region G2. No commodity is not yet bagged in the plastic bag F. Further, since the sales registration processing of the commodity is not performed at this time, nothing is displayed in the region G3.

Next, the control unit 100 distinguishes individual commodity from other commodities by performing labeling on a commodity included in the displayed image. Then, the control unit 100 respectively displays a thick contour L at the edge portion of each of the commodities (Act S 14) so that the customer who looks the display unit 22 can visually distinguish individual commodity on which labeling is performed from other commodities. Each commodity surrounded with the contour L indicates the commodity on which labeling is performed.

FIG. 6 illustrates an example in which the control unit 100 adds the contour L to each of the commodities and displays each of the commodities with the contour L on the display unit 22, in Act 14. As illustrated in FIG. 6, the contour L is displayed around each of the A, B, C, and D in the basket K.

In this state, the customer takes out one of the commodities in the basket K. The camera A 25 captures an image of the operation by the customer. The control unit 100 displays the operation in which the customer takes out the commodity from the basket K on the display unit 22. The control unit 100 displays the image of the operation in which the customer graphs one of the commodities to take it out from the basket K in the region G1 of the display unit 22.

FIG. 7 is a diagram illustrating a display image that illustrates the image of the operation in which the commodity C is taken out with the customer's hand T. Subsequently, the customer graphs the commodity C with his or her hand T to take it out. Then, the customer passes the commodity C which is taken out with his or her hand T in front of the reading window 23a of the reading unit 23. Then, the customer puts the commodity C in the plastic bag F. At this time, the camera B 26 captures an image of the operation in which the customer puts the commodity C is put in the plastic bag F. The camera B 26 captures an image of the commodity C put in the bag F by the customer. The control unit 100 displays the image of the operation in which the commodity C is put in the plastic bag F with the customer's hand T in the region G2 of the display unit 22. The control unit 100 displays the commodity C put in the plastic bag F in the region G2.

FIG. 8 is a diagram illustrating a display screen on which the control unit 100 displays in the region G2 of the screen an image of the operation, captured by the camera B 26, in which the customer puts a commodity in the plastic basket F. In FIG. 8, in the region G2, the commodity C is put in the plastic bag F with the customer's hand T and the commodities A, B, and D are displayed in the region G1.

The control unit 100 determines whether or not there is a change (movement of the commodity from the basket K) in the image of the commodity displayed in the region G1 of the display unit 22 (Act S21). If the commodity, on which labeling is performed, displayed in the region G1 is no longer displayed, the control unit 100 determines that there is a change in the image of the commodity displayed in the region G1. If it is determined that there is a change (Yes in Act S21), then the control unit 100 (receiving section 102) determines whether or not the commodity code read by the reading unit 23 is received (Act S22). If it is determined that the commodity code is received (Yes in Act S22), the control unit 100 executes the sales registration processing based on the received commodity code (Act S23). The control unit 100 reads the commodity information (a commodity code, a commodity name, a commodity price, and the like)of the commodity corresponding to the commodity code from a commodity master file (not illustrated), based on the received commodity code, and stores the commodity information in a commodity information unit 131. Then, the control unit 100 displays the stored commodity information in the region G3 (Act S24). Subsequently, the control unit 100 returns to the processing in Act S21.

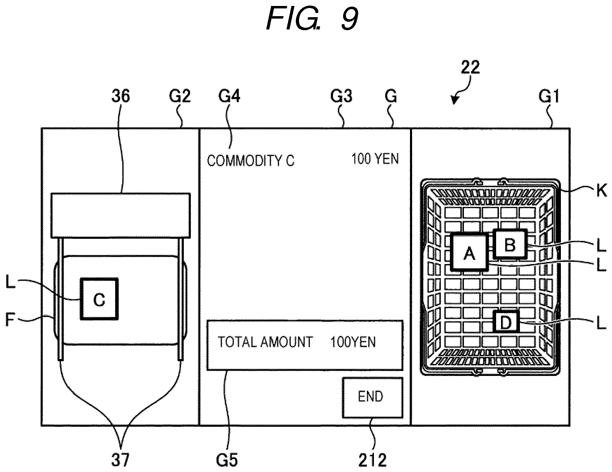

FIG. 9 is a diagram illustrating the commodity information displayed in the region G3 by the control unit 100 in Act S24. As illustrated in FIG. 9, the commodity information G4 of the commodity on which the sales registration processing is performed, and the total amount G5 are displayed in the region G3.

On the other hand, in Act S21, if it is determined that there is no change in the image of the commodity displayed in the region G1 of the display unit 22 (No in Act S21), the control unit 100 determines whether or not the commodity code read by the reading unit 23 is received (Act S31). If it is determined that the commodity code is received (Yes in Act S31), the control unit 100 (error notification section 103) executes an error processing for displaying (notifying) error information on the display unit 22 (Act S32). A state in which No is taken in Act 21 and Yes is taken in Act 31 is referred to a state that the commodity is not taken out from the basket K but the commodity code is received. There is a possibility of performance of an unfair act that the commodity is taken out from another place other than the basket K and the commodity code is read by the reading unit 23 by the customer, and thus the control unit 100 executes the error processing. In this case, the error is checked and the error state is cleared by the attendant who monitors the self-POS terminal 1. The control unit 100 determines whether or not the error state is cleared (Act S33). The control unit 100 waits for until the error state is cleared (No in Act S33), and returns to Act S21 if it is determined that the error state is cleared (Yes in Act S33).

If the commodity code is not received in S22 (No in Act S22), the commodity is taken out from the basket K but the commodity code is not received, and thus the control unit 100 executes the error processing in the same manner as described above (Act S32).

In Act 31, if it is determined that the commodity code is not received (No in Act S31), the control unit 100 determines whether or not there is a change in the image of the commodity displayed in the region G2 (Act S34). If a new commodity is displayed in the region G2 (Yes in Act S34), the control unit 100 determines that there is a change in the image of the commodity displayed in the region G2. In Act S34, if there is a change in the image of the commodity displayed in the region G2, it is determined that there is no change in the region G1 but the commodity is put in the plastic bag F without receiving the commodity code. It can be considered that there is a possibility of performing an unfair act that the commodity is taken out from another place other than the basket K and put in the plastic bag F without the input of the commodity code of the commodity, and thus the control unit 100 executes the error processing (Act S32).

On the other hand, if it is determined that there is no change in the image of the commodity displayed in the region G2 (No in Act S34), the control unit 100 determines whether or not the end key 212 displayed on the display unit 22 is operated (Act S41). If it is determined that the end key 212 is operated (Yes in Act S41), the control unit 100 executes the accounting processing based on the commodity information stored in the commodity information unit 131 (Act S42). At this time, the control unit 100 issues a receipt on which the commodity information of the commodity on which the accounting processing is performed and the accounting information are printed by the printing unit 24. Then, the control unit 100 ends the capturing of images by the camera A 25 and the camera B 26 (Act S43). The control unit 100 ends the display of the display screen on the display unit 22 (Act S44). The control unit 100 returns to the processing in Act 11. In Act S41, if it is determined that the end key 212 is not operated (No in Act S41), the control unit 100 returns to the processing in Act S21.

According to the embodiment, the camera A 25 captures an image of the commodity in the basket K placed on the basket placing stand 31. The camera A 25 captures an image of the operation in which the commodity is taken out from the basket K by the customer. On the other hand, the camera B 26 captures an image of the commodity put in the plastic bag F set on the plastic bag stand 32. The camera B 26 captures an image of the operation in which the customer puts the commodity in the plastic bag F. The control unit 100 displays the image captured by the camera A 25 and the image captured by the camera B 26, on the display unit 22. The control unit 100 displays the commodity in the basket K captured by the camera A 25. The control unit 100 displays the operation in which the customer takes out the commodity from the basket K captured by the camera A 25. Further, the control unit 100 displays the commodity put in the plastic bag F captured by the camera B 26. The control unit 100 displays the operation in which the customer puts the commodity in the plastic bag F captured by the camera B 26.

Thus, according to the self-POS terminal 1 in the embodiment, the operation on the self-POS terminal 1 by the customer is displayed on the display unit 22 of the self-POS terminal 1, and the customer operates the self-POS terminal 1, looking at the operation by himself/herself. Therefore, the customer can recognize that the operation by himself/herself is being captured by the camera, and thus it can be achieved that the customer stops short of performing the unfair act in the operation.

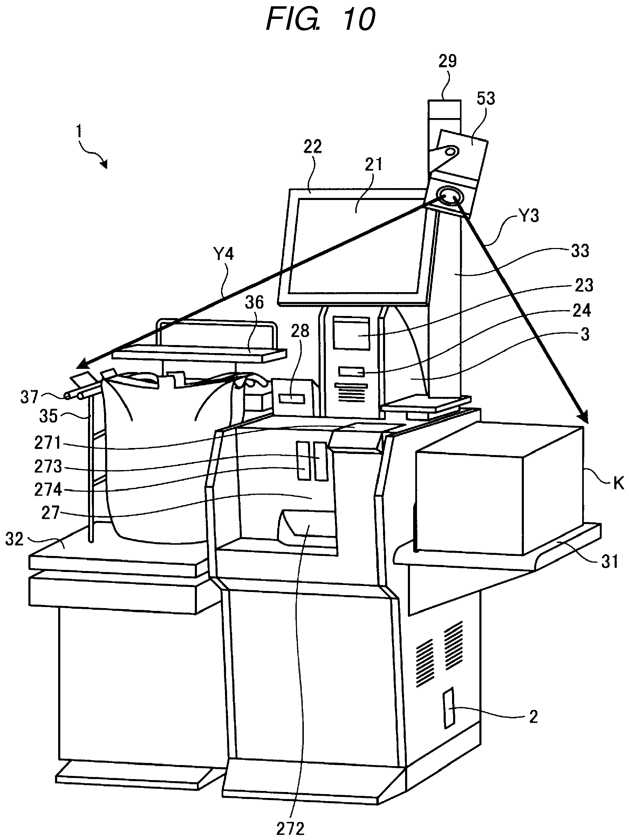

In the embodiment, the commodity in the basket K placed on the basket placing stand 31 and the operation in which the customer takes out the commodity from the basket K are captured by the camera A 25. In addition, the commodity put in the plastic bag F set on the plastic bag stand 32 and the operation in which the customer puts the commodity in the plastic bag F are captured by the camera B 26. However, for example, as a modification, one camera C 53 (refer to FIG. 10) may capture an image of the area from the basket placing stand 31 to the plastic bag stand 32 in a wide range. It is possible to capture an image of the area in a wide range by the camera C 53 installed at a higher position.

The camera C 53 as described above captures an image of a sequence of flow of the operation in which the commodity is taken out from the basket K, the commodity code is input by the reading unit 23, and the commodity is put in the plastic bag F by the customer. The control unit 100 displays a sequence of flow of the operation on the display unit 22, based on the image captured by the camera C 53.

In the modification in FIG. 10, the camera C 53 captures an image of the wide area from a point indicated by an arrow Y3 to a point indicated by an arrow Y4, i. e., the area from the basket placing stand 31 to the plastic bag stand 32. The control unit 100 displays the image of the captured area by the camera C 53 on the display unit 22.

According to the modification, it is possible that the customer stops short of performing the unfair act in the settlement operation on the self-POS terminal, as similar to the embodiment.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such embodiments or modifications as would fall within the scope and framework of the invention.

For example, in the embodiment, although the self-POS terminal 1 operated by the customer himself/herself is described as a checkout apparatus, the self-POS terminal 1 is not limited thereto. The embodiment can be applied to a checkout apparatus operated by a full-time operator. In such a modification, the checkout apparatus captures an image of the operation by the operator by a camera and displays the captured image. In this case, the image captured by the camera is displayed on the display unit for operator.

In the embodiment, although the image captured by the camera A 25 and the image captured by the camera B 26 are displayed on the display unit 22, the display is not limited thereto. For example, only the image captured by the camera A 25 may be displayed on the display unit 22. In this case, the camera B 26 is unnecessary.

Further, in the embodiment, although the reading unit 23 receives the commodity code by photographing the code attached to the commodity, the configuration of the reading unit 23 is not limited thereto. The reading unit 23 may be configured to specify the commodity based on the image of the commodity, using a general object recognition technology.

The program executed by the self-POS terminal 1 in the embodiment is provided in an installable format file or an executable format file, by being recorded on a computer-readable recording medium such as a CD-ROM, a flexible disk (FD), a CD-R, a digital versatile disc (DVD), or the like.

The program executed by the self-POS terminal 1 in the embodiment may be configured to be provided by being downloaded via a network such as Internet after being stored in a computer connected to the network. Further, the program executed by the self-POS terminal 1 may be configured to be provided or distributed via a network such as Internet.

The program executed by the self-POS terminal 1 may be configured to be provided by being incorporated in a ROM or the like in advance.

## Claims

1. A checkout apparatus comprising:
a first placing section configured to place thereon a commodity having a commodity specifying information for specifying the commodity;
a reading unit configured to read the commodity specifying information of the commodity placed on the first placing section;
a second placing section configured to place the commodity the commodity specifying information of which is read by the reading unit;
an image capturing unit configured to capture an image of the commodity placed on the first placing section;
a display unit configured to display the image of the commodity; and
a display section configured to display an image captured by the image capturing unit on the display unit if the image capturing unit captures the image showing at least a part of a movement of the commodity placed on the first placing section to the second placing section.

2. The apparatus according to claim 1, wherein the display section displays an image captured by the image capturing unit, the image showing that the commodity placed on the first placing unit is taken out for movement to the second placing unit.

3. The apparatus according to claim 1 or 2, wherein the display section displays an image captured by the image capturing unit, the image showing a sequence of flow in which the commodity placed on the first placing unit is moved to the second placing unit.

4. The apparatus according to any one of claims 1 to 3, wherein the display section displays a commodity information of the commodity on which a sales registration processing is performed based on the commodity specifying information read by the reading unit together with the image of the commodity on the display unit.

5. The apparatus according to any one of claims 1 to 4, further comprising:
a receiving section configured to receive the commodity specifying information read by the reading unit; and
an error notification section configured to notify an error on condition that the commodity specifying information is not received by the receiving section if the commodity placed on the first placing unit displayed on the display unit is moved from the first placing unit.

6. A system for processing the commodity sales, comprising:
a first placing means configured to place thereon a commodity having a commodity specifying information for specifying the commodity;
a reading means configured to read the commodity specifying information of the commodity placed on the first placing means;
a second placing means configured to place the commodity the commodity specifying information of which is read by the reading means;
an image capturing means configured to capture an image of the commodity placed on the first placing means;
a display unit means configured to display the image of the commodity; and
a display section means configured to display an image captured by the image capturing means on the display unit means if the image capturing unit means captures the image showing at least a part of a movement of the commodity placed on the first placing means to the second placing means.

7. The system according to claim 6, wherein the display section means displays an image captured by the image capturing means, the image showing that the commodity placed on the first placing means is taken out for movement to the second placing means.

8. The system according to claim 6 or 7, wherein the display section means displays an image captured by the image capturing means, the image showing a sequence of flow in which the commodity placed on the first placing means is moved to the second placing means.

9. The system according to any one of claims 6 to 8, wherein the display section means displays a commodity information of the commodity on which a sales registration processing is performed based on the commodity specifying information read by the reading means together with the image of the commodity on the display unit means.

10. The apparatus according to any one of claims 1 to 9, further comprising:
a receiving means configured to receive the commodity specifying information read by the reading means; and
an error notification means configured to notify an error on condition that the commodity specifying information is not received by the receiving means if the commodity placed on the first placing means displayed on the display unit means is moved from the first placing means.

11. A method for performing a checkout, comprising the steps of:
- placing on a first placing section a commodity having a commodity specifying information for specifying the commodity;
- reading the commodity specifying information of the commodity placed on the first placing section by a reading unit;
- placing, by a second placing section, the commodity the commodity specifying information of which is read by the reading unit;
- capturing an image of the commodity placed on the first placing section by an image capturing unit;
- displaying the image of the commodity by a display unit; and
- displaying, by a display section, an image captured by the image capturing unit on the display unit if the image capturing unit captures the image showing at least a part of a movement of the commodity placed on the first placing section to the second placing section.

12. The method according to claim 11, wherein the displaying step by the display section comprises displaying an image captured by the image capturing unit, the image showing that the commodity placed on the first placing unit is taken out for movement to the second placing unit.

13. The method according to claim 11 or 12, wherein the displaying step by the display section comprises displaying an image captured by the image capturing unit, the image showing a sequence of flow in which the commodity placed on the first placing unit is moved to the second placing unit.

14. The method according to any one of claims 11 to 13, wherein the displaying step by the display section comprises displaying commodity information of the commodity on which a sales registration processing is performed based on the commodity specifying information read by the reading unit together with the image of the commodity on the display unit.

15. The method according to any one of claims 11 to 14, further comprising the steps of:
- receiving, by a receiving section, the commodity specifying information read by the reading unit; and
- notifying, by an error notification section, an error on condition that the commodity specifying information is not received by the receiving section if the commodity placed on the first placing unit displayed on the display unit is moved from the first placing unit.
